Europäisches Patentamt

European Patent Office

Office européen des brevets

(11) Publication number: **0 456 263 A1**

# EUROPEAN PATENT APPLICATION

(21) Application number: **91107636.2**

(22) Date of filing: **10.05.91**

(51) Int. Cl.⁵: **A23G 1/20, A23G 3/02**

(30) Priority: **11.05.90 IT 6734990**

(43) Date of publication of application:
**13.11.91 Bulletin 91/46**

(84) Designated Contracting States:
**BE CH DE FR LI NL**

(71) Applicant: **MASPE S.r.l.**
**Via Rieti, 40**
**I-10095 Grugliasco(IT)**

(72) Inventor: **Gallo, Francesco**
**Viale Nuvoli 4**
**I-10098 Rivoli(IT)**

(74) Representative: **Jorio, Paolo et al**
**Studio Torta, Via Viotti, 9**
**I-10121 Torino(IT)**

(54) **Pouring machine for food products in the fluid state.**

(57) A machine (1) for pouring food products in the fluid state, such as molten chocolate, creams or syrups, includes a body (4) defining two chambers (9) housing respective gear pumps (40) each of which is constituted by a plurality of first and second gears (41, 42) mounted on respective shafts (16, 17); the chambers (9) are divided by spacing plates (45) into a plurality of compartments (46), each of which houses a pair of meshed gears (41, 42) and communicates with a supply aperture (10) for the product and with a respective delivery outlet (47) to a distribution plate (49). The pumps (40) are driven by a brushless electric motor (68) controlled by a programmable unit (79) which, in each pouring cycle, causes it to rotate through a predetermined angle corresponding to the pouring of a predetermined quantity of the product, and to rotate in the opposite sense, through a smaller angle, which corresponds to a slight sucking back of the product itself.

Fig.3

The present invention relates to a machine for pouring food products in the fluid state such as molten chocolate, creams or syrups.

Pouring machines are used in the food industry, and in the sweet industry particularly, for effecting multiple pourings of products in the fluid state in predetermined quantities and at predetermined points, for example for filling the various cavities in a mould for small chocolates with molten chocolate.

Pouring machines are known which include a body defining at least one chamber adapted to be filled with the product, a plurality of tubes communicating with the chamber and with respective product-delivery nozzles which have normally-closed shut-off valves. Fluid-actuated pistons are slidable in the tubes and their working travel causes first the closure of the duct through which the respective tube communicates with the product-supply chamber and then the compression of the product thus isolated within the tube; when the pressure on the product exceeds the calibrated value for the shut-off valve, the latter opens and causes the product to be poured.

Known pouring machines of the type described briefly above have a certain number of disadvantages.

Above all, the metering of the product is not very reliable; moreover maintenance of the machine is difficult and burdensome and requires frequent dismantling of the nozzles; particularly when the pistons are pneumatically operated, the respective cylinders need large bores and hence are very bulky and their operation is slow, with high energy losses.

The object of the present invention is to provide a pouring machine for fluid food products which is free from the aforesaid disadvantages of known machines.

This object is achieved by the present invention in that it relates to a pouring machine for fluid food products which does not have the disadvantages of the pouring machines of known type specified above.

This object is achieved by the present invention in that it relates to a pouring machine for fluid food products, such as molten chocolate, creams, syrups and the like, of the type including a body defining at least one supply aperture and adapted to contain the product to be poured, means for distributing the product to various pouring points and means for conducting the product from the supply aperture to the distribution means, characterised in that the conducting means include at least one gear pump.

In order to provide a better understanding of the present invention, one preferred embodiment will be described below, purely by way of non-limiting example, with reference to the appended drawings, in which:

Figure 1 is a partially-sectioned front elevational view of a pouring machine formed in accordance with the present invention;

Figure 2 is a rear elevational view of the machine of Figure 1; and

Figure 3 is a section taken in the plane of the line III-III of Figure 2;

Figure 4 is a plan view of a distribution plate of the machine of Figure 1; and

Figure 5 is a rear elevational view of the machine of Figure 1, provided with a following mechanism for pouring on a continuous line of advance.

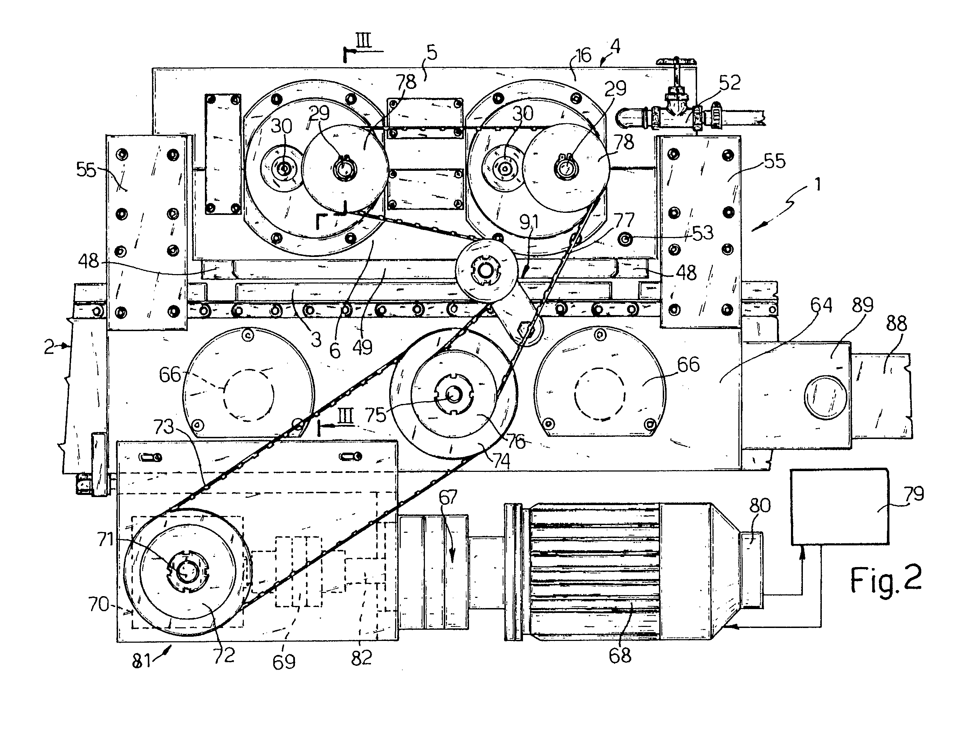

With reference to the drawings, a pouring machine, particularly but not exclusively for chocolate, is generally indicated 1. This machine, which will be described more fully below, is associated with a chain conveyor 2 (Figure 2), arranged to convey the moulds 3 for the formation of small chocolates in a production line for the chocolates themselves.

The machine 1 includes a main body 4 of substantially parallelepipedal form constituted by two plates 5, 6, an upper and a lower respectively, superposed and fixed to each other. These plates, which conveniently are formed from light alloy, have respective pairs of recesses 7, 8 arranged in pairs alongside each other in their respective cooperating faces so as together to define two longitudinal through-chambers 9 of rectangular section which is elongate in a horizontal direction. The upper plate 5 has two longitudinal through-apertures 10, of elongate rectangular form in plan, which communicate with the respective chambers 9.

The ends of the chambers 9 are closed by respective covers 13, 14, a front cover and rear one respectively. The chambers 9 house respective pairs of shafts 16, 17 of which one (16), in correspondence with the respective aperture 10, has a splined portion 18 of a length slightly greater than that of the aperture 10 itself; the components associated with each chamber 9 are identical to each other and the description which follows will therefore refer, for simplicity, refer to a single one of the chambers 9.

The shafts 16, 17 have respective integral pins 19 at their front ends which are supported by bearings 20 housed in the covers 13, and have cylindrical enlargements 24 at their rear ends provided with diametral seats 25 with flat walls.

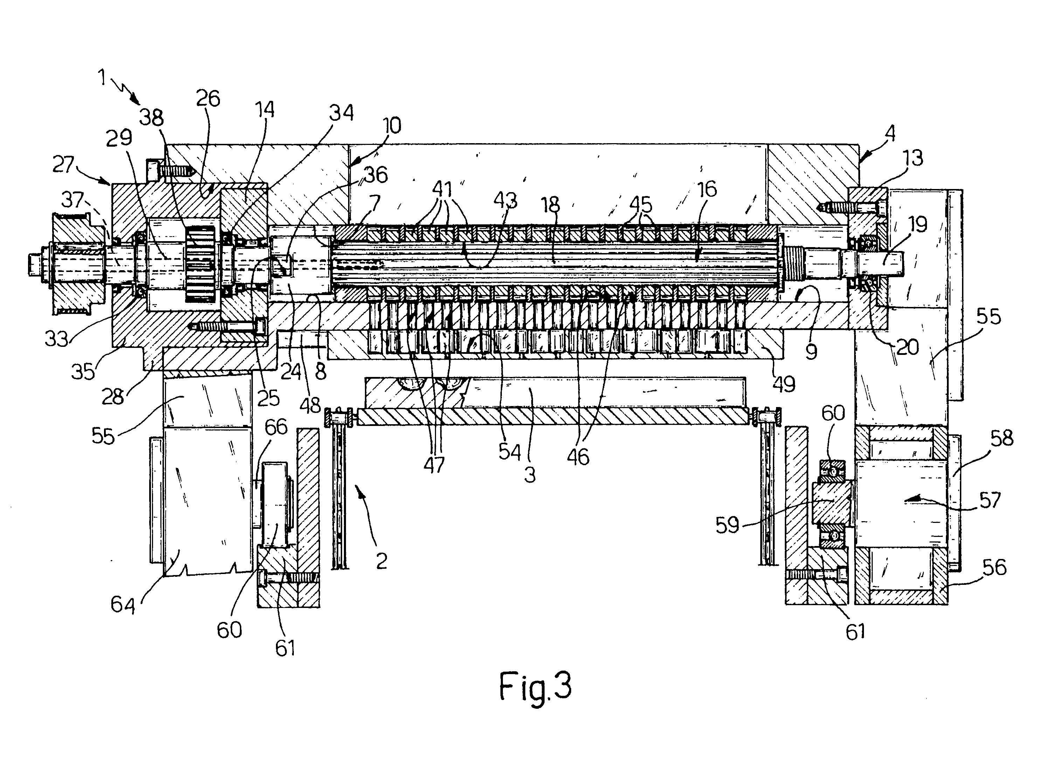

An essentially cup-shaped support member 27 is mounted on the rear cover 14, within a corresponding seat 26 in the body 4, and has a peripheral flange 28 for its fixing to the body 4. The member 27 houses two shafts 29, 30 coaxial with the respective shafts 16, 17 of which only the shaft 29 is well visible in Figure 3.

These shafts 29, 30 are supported by respective bearings 33, 34 housed in a frontal wall 35 of the support member 27 and in the cover 14 and have respective end portions 36 provided with opposed flats which engage prismatically in the respective seats 25 of the shafts 16, 17 rendering the shaft 29 torsionally rigid with the shaft 30.

The shafts 29, 30 house respective through-screws 37 which connect them axially to the shafts 29, 30.

Respective meshed gears 38, defining a unitary transmission ratio, are keyed to the shafts 29 and 30 within the support member 27.

The chambers 9 constitute the outer casing of a multiple gear pump, generally indicated 40.

More particularly, the pump 40 includes a high number, twenty one in the specific embodiment, of meshed gear pairs 41, 42 mounted on the shaft 16 and the shaft 17 respectively, the teeth of the gears being arranged to slide substantially in sealing engagement with the side walls of the chambers 9. The gears 41 have a grooved inner profile 43 which allows their assembly on the splined portion 18 of the shaft 16 and their angular coupling therewith. The gears 42 are, instead, provided with a central cylindrical hole 44 for their mounting on the shaft 17.

The various gear pairs 41, 42 are separated axially from one another by a plurality of spacer plates 45 which are apertured in correspondence with the shafts 16, 17, have (Figure 3) the same cross-section as the chamber 9 and are housed substantially sealingly therein so as to divide the latter into a plurality of compartments 46.

Each of the said compartments communicates upwardly with the corresponding aperture 10 in the body 4 which acts as a suction inlet for the pump 40; the lower plate 6 of the body 4 is formed with through-holes 47 on the centre line of each chamber 46 which serve as delivery openings for the pumps 40 towards the zone beneath the body 4.

A hopper (not illustrated) is fixed, in use, to the upper plate 5 of the body for filling with chocolate; the apertures 10, which communicate with the interior of the hopper, allow the chocolate to feed under gravity to the pumps 40.

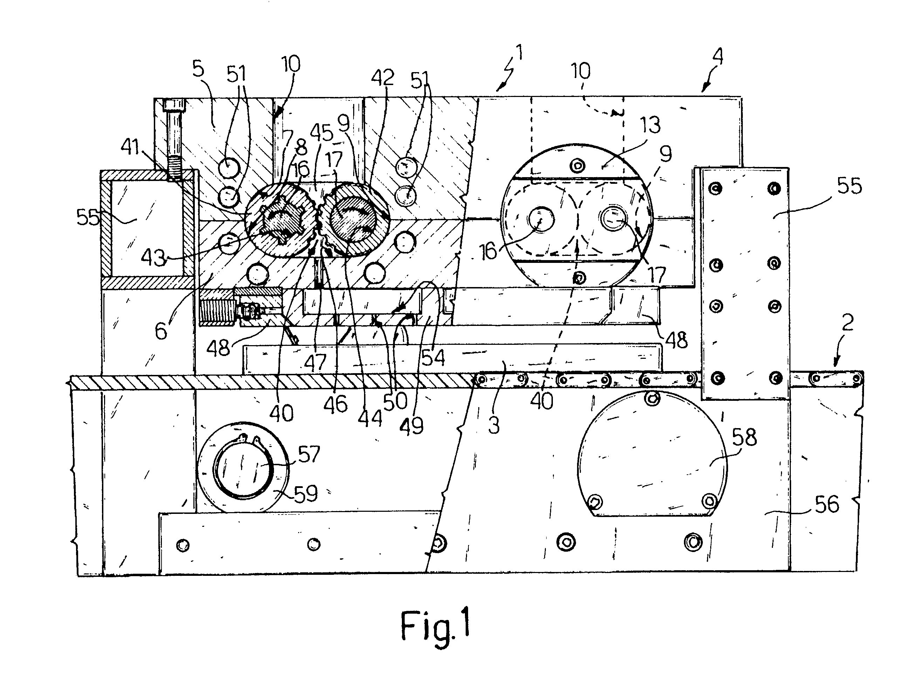

Intercommunicating ducts 51 (Figure 1) are formed in the body 4 and, in particular, in the zones adjacent the chambers 9. These ducts together define an hydraulic circuit provided at its inlet with an on/off tap 52 which is adapted to be connected to a hot water generator not illustrated, and with a discharge 53 (Figure 2).

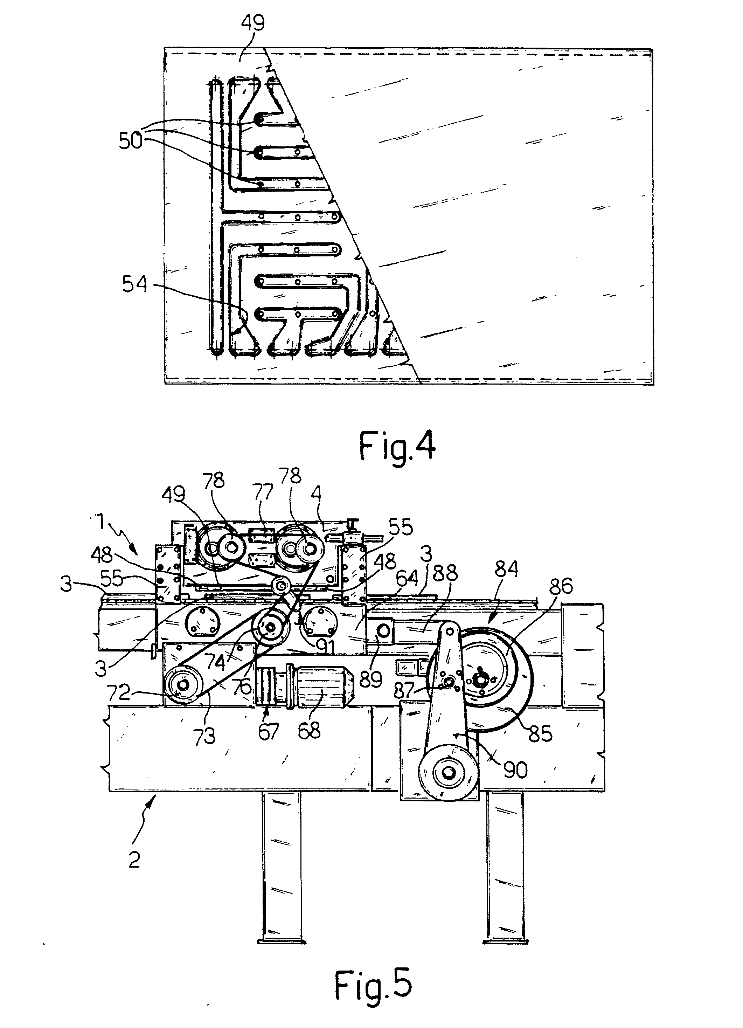

A distribution plate 49, illustrated in detail in Figure 4, is fixed beneath the body 4 by means of a pair of side gibs 48 of which one is adjustable.

The plate 49, which is rectangular, has the same number and arrangement of through-holes 50 as the cells in the mould 3. The plate 49 also has a plurality of channels 54 in its upper surface for conducting the product from the delivery points of the pumps 38 (corresponding to the traces of the holes 47 indicated in Figure 4) to the holes 50. The plate 49 thus constitutes a "personalised" element of the machine for personalising it to each type of use for which it is intended; it in fact suffices to vary the number and arrangement of the holes 50 and of the channels 54 to adapt the machine 1 to the various moulds with which it must be used, without any further modification.

The body 4 of the machine 1 is supported by four box-section pillars 55 fixed to the upper plate 6 at the corners of the latter.

A front beam 56 is fixed to the base of the front pillars 55 and carries a pair of pins 57 in respective through-seats. These pins each have an end flange 58 for fixing to an outer face of the beam 56 and an opposite end portion 59, of smaller diameter, on which a respective bearing 60 is mounted and which, in use, slides on a lateral guide 61 of the conveyor 2.

In an entirely similar manner, a rear beam 64 is fixed to the base of the two rear pillars 55 and carries pins 66 identical to the pins 65 described above and also provided with bearings 60 for sliding on an opposite lateral guide 61 of the conveyor 2.

A transmission unit 81 is fixed to the rear beam 64 and, through conventional support means 67, carries an electric motor 68, conveniently of the brushless, triple-phase type, disposed with its axis horizontal and parallel to the beam 64. The transmission unit 81 includes, essentially, a bevel pair 70, not illustrated in detail in that it is known per se, and a torque-limiting coupling 69 interposed between the bevel pair 70 and a shaft 82 of the motor 68; the output shaft 71 of the bevel pair 70, arranged with its axis horizontal and perpendicular to the beam 64, carries a drive pulley 72.

A toothed belt 73 transmits drive from the drive pulley 72 to a driven pulley 74 keyed to a pin 75 mounted rotatably on the rear beam 64. A second pulley 76 is keyed to the same pin 75 and drives a second belt 77 which in turn drives two driven pulleys 78 keyed to the end portions of the shafts 29 of the pumps 40. The tension in the second belt 77 can be adjusted by means of a tensioning device 91 of conventional type.

The position of the motor 68 is controlled in known manner by a programmable control unit 79 which receives signals relating to the angular position of the shaft 82 of the motor 68 from a position transducer (resolver) 80 associated with the latter and is arranged to vary the supply to the motor 68 itself in response to the signals, in accordance with predetermined laws.

The machine 1 is, conveniently, provided with a following mechanism 84 for following the mould 3 so as to reciprocate the machine itself along the guide 61, the travel in the direction of the advance of the conveyor 2 being synchronised with the advance of the moulds.

This mechanism consists essentially of a fly wheel 85 driven by drive means, not illustrated, at a speed proportional to the speed of advance of the conveyor 2 and provided with an eccentric circular guide 86 slidably engaged by a pin 87 of a lever 90 one end of which is pivoted on the conveyor structure itself.

The lever 90 is pivotally connected at its opposite end to a connecting rod 88 articulated on a lateral appendage 89 of the rear beam 64 of the machine 1.

The operation of the machine 1 is as follows.

The operation of the mechanism 84 which does not form part of the present invention is well known to experts in the art and will not be described in detail.

By virtue of this mechanism, the machine 1 slides along the guides 61 of the conveyor so as to follow each mould 3 for the travel needed to complete the pouring, then returns to its starting point to carry out the subsequent pouring cycle. Hence, for the purposes of the operation of the machine itself, it may be assumed to be stationary relative to the mould 3 in a position such that the cells of the mould are exactly in vertical alignment with the holes 50 in the distribution plate 49.

The chocolate, maintained in the fluid state by the circulation of hot water in the ducts 51, reaches the aperture 10 in the upper portions of the various compartments 46 into which the chambers 9 are subdivided by the plates 45.

At the beginning of the pouring cycle, the control unit 79 supplies the motor 68 which rotates and in turn drives the rotation of the shafts 29 through the bevel pair 70, the pulley 72, the belt 73, the pulleys 74, 76, the belt 77 and the pulleys 78.

Each of the shafts 29 is rotationally rigid with the respective shaft 16 which rotates the gears 41 and hence the gears 42 in the sense indicated in Figure 1. There is no relative motion between these latter and the respective shaft 17 and hence no wear since the shafts 29 transmit drive by means of the gears 38 to the respective shafts 30 and hence to the corresponding shafts 17 which thus rotate at the same angular velocity as the gears 42.

The pumps 40 thus function as a plurality of gear pumps in parallel; each pair of gears 41, 42 takes the molten chocolate from the upper portion of the respective compartment 46 and forwards it to the lower portion of the same compartment. The chocolate leaves through the apertures 47 which are associated, either individually or in groups, with a channel 54 in the distribution plate 49.

The exact quantity of chocolate supplied by the pumps 40 is controlled by the unit 79 which stops the motor 68, and hence the pumps 40, when the motor has rotated through an angle, detected by the resolver 80, equal to the programmed value which depends on the type of mould and which is stored in the unit 79 itself.

It is seen that the quantity of chocolate which must be supplied does not, in general, correspond to a rotation of the gears 41, 42 through a multiple of the pitch of the gears themselves and thus, at the end of the pouring cycle, there is generally an excess delivery corresponding to a fraction of the volume of the spaces between the teeth which communicate with the output of the pumps. Moreover, under operating conditions, both the lower zones of the compartments 46 and the distribution channels 54 in the plate 49 contain a certain quantity of molten chocolate which is not poured through the holes 47 and 50 due to its viscous nature and contact with the walls of the holes themselves, which are suitably sized. Consequently, the simple stoppage of the pumps cannot suffice to stop the pouring of chocolate into the cells of the mould, with the unaesthetic result of dribbles on the final product.

In order to avoid the pouring excesses due to the effects mentioned above and, at the same time, return the gears 41, 42 to an angular reference position at the beginning of the cycle, the unit 79 puts the motor 68 into reverse but rotates it through a smaller angle, causing a slight sucking back of the chocolate by the pumps 40, and hence a sharp interruption of the delivery without any dribbling.

From an examination of the characteristics of the machine 1 made in accordance with the terms of the present invention, the advantages which it achieves are evident; in the first place, precise and constant metering of the product is obtained; moreover, the machine is simple to maintain due to the absence of nozzles; by virtue of the absence of fluid-actuated cylinders, the dimensions of the machine are relatively small and the operating speed may be much higher.

Finally, the different operating principle enables it to have greater versatility in use; in particular, the injection points may be reduced by closure of the corresponding holes and removal of the corresponding gears (these being replaced by spacers); moreover the metering of the product and the sucking back may easily be programmed and varied in dependence on the different characteristics of the product itself and of the quantities required for each application. A further possibility is continuous pouring ("veil") with exact metering of the product, the mechanism for following the mould being eliminated and the machine being held at a fixed position on a production line.

Finally, it is clear that the machine 1 may be varied and modified without departing from the scope of protection of the present invention. In particular, the machine 1 may be fixed instead of movable.

## Claims

1. A machine for pouring food products in the fluid state, such as molten chocolate, creams, syrups and the like, of the type including a body defining at least one supply aperture and adapted to contain the product to be poured, means for distributing the product to various pouring points and means for conducting the product from the supply aperture to the distribution means, characterised in that the conducting means include at least one gear pump (40).

2. A machine according to Claim 1, characterised in that the pump (40) includes a plurality of first gears (41) mounted on a first drive shaft (16) and a plurality of second gears (42) mounted on a second shaft (17) with its axis parallel to the first shaft (16), the first gears (41) being meshed with respective said second gears (42), the shafts (16, 17) and the gears (41, 42) being housed in a chamber (9) in the body (4) communicating with the supply aperture (10) and with the distribution means (47, 49).

3. A machine according to Claim 2, characterised in that it includes partitioning means (45) for dividing the chamber (9) into a plurality of sealed compartments (46) each housing a first gear and a second gear of the said gears (41, 42) which are meshed with each other.

4. A machine according to Claim 3, characterised in that the distribution means comprise a plurality of delivery apertures (47) for the product, each of which communicates with a respective one of the said compartments (46) and a distribution plate (49) which can be fixed to the body (4) and is provided with a plurality of distribution channels (54) and pouring through-holes (50), each of the channels (54) communicating with at least one delivery aperture (47) and at least one pouring hole (50).

5. A machine according to one of Claims 2 to 5, characterised in that it includes a an electric motor (68) for driving the pump (50) and control means (79) for the electric motor.

6. A machine according to Claim 5, characterised in that the electric motor (68) is of the brushless type.

7. A machine according to Claim 5 or 6, characterised in that the control means include position transducer means (80) associated with a shaft (82) of the motor (68) and a programmable control unit (79) which receives signals from the transducer means (80) which are indicative of the angular position of the shaft (82) and which is arranged to vary the electrical supply to the motor (68) in response to the input signals and in accordance with predetermined laws.

8. A machine according to Claim 7, characterised in that the control unit (79) is adapted to vary the electrical supply to the motor (68) so as to cause it to effect a first rotation through a predetermined angle in a first rotational sense, which corresponds to the pouring of a predetermined quantity of product, and subsequently to effect a second rotation, through a smaller angle, in the opposite sense of rotation.

9. A machine according to any one of the preceding Claims, characterised in that it includes two of the said pumps (40) driven by the motor (68) through belt transmission means (70, 72, 74, 74, 77, 78).

10. A machine according to any one of the preceding Claims, characterised in that it includes support means (57, 66, 60) for enabling it to slide on guide means (61) associated with a conveyor (2) for conveying moulds (3) along a production line for food products, and a mechanism (84) for reciprocating the machine (1) along the said conveyor (2), the reciprocating motion including a travel following a mould (3) and a return travel.

Fig.1

Fig.2

EP 0 456 263 A1

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2939407 (M.F.KEATHLEY, SR. ET AL.) <br> * column 1, lines 15 - 33; figures 1, 2 * <br> * column 2, lines 17 - 19 * <br> * column 2, lines 57 - 70 * <br> * column 3, line 67 - column 4, line 17 * <br> * column 5, lines 7 - 39 * | 1-5 | A23G1/20 <br> A23G3/02 |
| Y |  | 7-8 |  |
| Y | PATENT ABSTRACTS OF JAPAN <br> vol. 13, no. 130 (M-808)(3478) 30 March 1989, <br> & JP-A-63 297789 (OMRON TATEISI ELECTRONICS CO.) <br> 5 December 1988, <br> * the whole document * | 7-8 |  |
| Y | EP-A-293585 (ROBERT BOSCH GMBH) <br> * abstract * | 7-8 |  |
| X | DATABASE WPIL/DERWENT  AN=85-193597<32> DW=8532 <br> DERWENT PUBLICATIONS LTD., LONDON, GB. <br> & JP-A-60120944 <NOBEL SEIKA K.K.> <28.06.1985> <br> * whole abstract * | 1 |  |
| X | DATABASE WPIL/DERWENT  AN=88-305612<43> DW=8843 <br> DERWENT PUBLICATIONS LTD., LONDON, GB. <br> & SU-A-1387956 <KEMER FOOD IND.INST.> <15.04.88> <br> * whole abstract * | 1 | TECHNICAL FIELDS SEARCHED (Int. Cl.5 ) <br><br> A23G |
| A | US-A-4212609 (RUDOLPH J. FAY) <br> * figures 1-3 * | 1-5 |  |
| A | DATABASE WPI/DERWENT  AN=77-G8667Y <33> <br> DERWENT PUBLICATIONS LTD., LONDON, GB. <br> & SU-A-537195 <SHATRAVKA A. M.> <25.06.1973> <br> * whole abstract * | 8 |  |

The present search report has been drawn up for all claims

| Place of search | Date of completion of the search | Examiner |
|---|---|---|
| BERLIN | 09 AUGUST 1991 | ALVAREZ ALVAREZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)